# EUROPÄISCHE PATENTSCHRIFT

(11) **EP 3 578 793 B1**
(45) Veröffentlichungstag und Bekanntmachung des Hinweises auf die Patenterteilung: **13.10.2021**
(21) Anmeldenummer: 19176062.8
(22) Anmeldetag: 23.05.2019
(51) Int. Cl.: F02M 21/06, F02M 31/16, F02M 31/125, F02M 31/18, F02M 31/06

(54) **ZUFÜHRSYSTEM ZUM ZUFÜHREN EINES CNG- ODER LNG-KRAFTSTOFFES**
FEED SYSTEM FOR FEEDING A CNG OR LNG FUEL
SYSTÈME D'ALIMENTATION PERMETTANT L'ALIMENTATION EN CARBURANT GNC OU GNL

(30) Priorität: 04.06.2018 DE 102018113240
(43) Veröffentlichungstag der Anmeldung: 11.12.2019
(73) Patentinhaber: Volkswagen AG, 38440 Wolfsburg (DE)
(72) Erfinder: Bippes, Michael, 38112 Braunschweig (DE); Weißner, Michael, 38442 Wolfsburg (DE)
(74) Vertreter: karo IP

(56) Entgegenhaltungen:
- AU-A4- 2009 100 157
- DE-A1-102008 063 566
- DE-A1-102014 210 806
- US-A- 4 688 537
- KREPEC T ET AL: "Improved concept of hydrogen on-board storage and supply for automotive applications", INTERNATIONAL JOURNAL OF HYDROGEN ENERGY, ELSEVIER SCIENCE PUBLISHERS B.V., BARKING, GB, Bd. 15, Nr. 1, 6. Juni 1989 (1989-06-06), Seiten 27-32, XP025640251, ISSN: 0360-3199, DOI: 10.1016/0360-3199(90)90127-K [gefunden am 1990-01-01]

## Beschreibung

Die Erfindung betrifft ein Zuführsystem zum Zuführen eines CNG- oder LNG-Kraftstoffes aus einem Tank hin zu einer Verbrennungskraftmaschine. Das Zuführsystem kann insbesondere in mobilen Systemen, z. B. in einem Kraftfahrzeug, eingesetzt werden.

Bei Gasfahrzeugen, die mit CNG (*"compressed natural* gas") bzw. mit LNG (*"liquefied natural* gas") betrieben werden, ist z. B. eine Kaltabfahrt, insbesondere unter hoher Last, kritisch, weil bereits nach wenigen Metern ein Gasdruckregler oder andere Komponenten, wie z. B. Injektoren, vereisen können und damit das Kraftfahrzeug fahruntauglich sein kann.

Es ist bereits bekannt, den Gasdruckregler in den Wasserkreislauf des Kraftfahrzeugs einzubinden. Diese Lösung hat sich jedoch als zu träge herausgestellt, d. h. die Wärmezufuhr kann gerade bei einer Kaltabfahrt nicht ausreichend schnell erfolgen, so dass eine Vereisung weiter auftreten kann.

Alternativ kann eine Standheizung zur Beheizung des Gasdruckreglers eingesetzt werden, die aber aufgrund der thermischen Trägheit des Systems ausreichend früh vor dem Kaltstart der Verbrennungskraftmaschine in Betrieb zu nehmen ist. Standheizungen bedürfen also einer vorausschauenden Einsatzplanung und verbrauchen regelmäßig viel Kraftstoff.

Weiter können bivalente Kraftstoffsysteme vorgehalten werden, bei denen der Kaltstart und die Kaltabfahrt auf einem weiteren, für eine Kaltabfahrt geeigneten Kraftstoff wie z.B. Benzin oder Dieselkraftstoff erfolgt und erst danach auf den CNG- oder LNG-Kraftstoff umgestellt wird.

Die DE 10 2008 063 566 A1 ist auf einen Gasdruckregler mit einem Gehäuse gerichtet. In dem Gehäuse ist eine Beheizungsvorrichtung vorgesehen.

Die DE 10 2014 210 806 A1 ist auf eine gasbetriebene Verbrennungskraftmaschine gerichtet. Der gasförmige Kraftstoff kann beheizt werden, elektrisch oder über Abgas. Die Heizeinrichtung ist zwischen einem Tank für den Kraftstoff und der Verbrennungskraftmaschine angeordnet. Die US4688537 A ist auf einen Zuführsystem gerichtet, wobei die Beheizung des Gasdruckreglers einen Phasenübergang eines Wärmeübertragungsmedium umfasst.

Aufgabe der vorliegenden Erfindung ist es, die mit Bezug auf den Stand der Technik angeführten Probleme zumindest teilweise zu lösen. Insbesondere soll eine besonders vorteilhafte Beheizung bei einem Zuführsystem zum Zuführen eines CNG- oder LNG-Kraftstoffes vorgeschlagen werden.

Zur Lösung dieser Aufgaben trägt ein Zuführsystem mit den Merkmalen gemäß Patentanspruch 1 bei. Vorteilhafte Weiterbildungen sind Gegenstand der abhängigen Patentansprüche.

Es wird ein Zuführsystem zum Zuführen eines CNG- oder LNG-Kraftstoffes aus einem Tank hin zu einer Verbrennungskraftmaschine vorgeschlagen. Das Zuführsystem weist zumindest eine Leitung, eine Heizeinrichtung und einen Gasdruckregler auf, wobei die Leitung über ein erstes Ende mit einem Tank verbindbar ist und über ein zweites Ende mit dem Gasdruckregler verbunden ist. Zumindest der Gasdruckregler (und ggf. zusätzlich auch wenigstens ein Teil der Leitung) ist über die Heizeinrichtung beheizbar. Die Heizeinrichtung umfasst zumindest eine Heizquelle und eine erste Kammer, in der ein erstes Wärmeübertragungsmedium angeordnet ist. Eine Beheizung des Gasdruckreglers kann ausgehend von der Heizquelle und zumindest über das erste Wärmeübertragungsmedium erfolgen.

Insbesondere wird vorgeschlagen, den Gasdruckregler, ggf. zusätzlich die sich zwischen Tank und Gasdruckregler erstreckende Leitung, für den CNG- oder LNG-Kraftstoff zu beheizen. Damit kann der CNG- oder LNG-Kraftstoff vor bzw. während der Entspannung über den Gasdruckregler bereits eine ausreichend hohe Temperatur aufweisen, so dass eine Vereisung oder durch unterschiedliche Materialausdehnung in Folge der Temperaturänderung verursachtes Klemmen ausgeschlossen werden kann.

Insbesondere kann der Gasdruckregler auch unmittelbar am Tank angeordnet sein, wobei die Leitung dann eine (infinitesimal) kurze Erstreckung hat.

Die Heizquelle ist vorliegend die Wärmequelle. Eine Temperaturerhöhung des CNG- oder LNG-Kraftstoffes wird also durch Wärmeübertragung und/oder -leitung ausgehend von der Heizquelle realisiert. Dabei kann die Heizquelle Wärme z. B. durch Verbrennen des CNG- oder LNG-Kraftstoffes oder durch elektrische Widerstandserwärmung erzeugen bzw. derart erzeugte Wärme verwenden.

Ausgehend von der Heizquelle erfolgt die Beheizung des Gasdruckreglers insbesondere immer zumindest über das erste Wärmeübertragungsmedium. Das erste Wärmeübertragungsmedium kann ein festes, flüssiges und/oder gasförmiges Medium sein. Insbesondere weist das erste Wärmeübertragungsmedium einen anderen Werkstoff, ein anderes Material bzw. eine andere Zusammensetzung als die erste Kammer auf.

Insbesondere kontaktiert die erste Kammer den Gasdruckregler bzw. dessen Gehäuse. Bevorzugt wird der Gasdruckregler bzw. dessen Gehäuse durch das erste Wärmeübertragungsmedium innerhalb der ersten Kammer insbesondere unmittelbar beaufschlagt.

Es ist möglich, dass der Gasdruckregler in wärmeleitender Verbindung zur ersten Kammer angeordnet ist und eine Wandung der ersten Kammer die wärmeleitende Verbindung zwischen Gasdruckregler und erstem Wärmeübertragungsmedium bildet.

Insbesondere ist der Gasdruckregler insbesondere gasdicht zur ersten Kammer bzw. zum ersten Wärmeübertragungsmedium angeordnet.

Die Heizeinrichtung umfasst zumindest eine zweite Kammer, in der ein zweites Wärmeübertragungsmedium angeordnet ist. Die Beheizung des Gasdruckreglers erfolgt ausgehend von der Heizquelle zunächst über das zweite Wärmeübertragungsmedium und dann zumindest über das erste Wärmeübertragungsmedium. Insbesondere kann so ein (größerer) Mindestabstand zwischen der Heizquelle und dem den Kraftstoff führenden Gasdruckregler eingehalten werden, bzw. eine bestimmte (Grenz-)Temperatur, z. B. des den Gasdruckregler kontaktierenden ersten Wärmeübertragungsmediums, die nicht überschritten werden soll.

Die Beheizung umfasst zumindest einen Phasenübergang zumindest des ersten Wärmeübertragungsmediums (ggf. auch des zweiten Wärmeübertragungsmediums).

Insbesondere wird vorgeschlagen, dass zumindest das erste Wärmeübertragungsmedium während der Beheizung durch die Heizquelle und zur Beheizung des Gasdruckreglers einen Phasenübergang von fest zu flüssig, von fest zu gasförmig und/oder bevorzugt von flüssig zu gasförmig aufweist.

Insbesondere wechselt das erste Wärmeübertragungsmedium nach Erwärmung zumindest teilweise von einem flüssigen Zustand in einen gasförmigen Zustand und der Gasdruckregler ist durch eine Kondensation des ersten Wärmeübertragungsmediums beheizbar.

Insbesondere ist der Gasdruckregler unmittelbar von dem ersten Wärmeübertragungsmedium beaufschlagbar, bzw. erstreckt sich der Gasdruckregler bzw. dessen Gehäuse in die erste Kammer hinein oder ist in der ersten Kammer angeordnet, so dass das erste Wärmeübertragungsmedium den Gasdruckregler direkt kontaktiert. Insbesondere bildet der Gasdruckregler bzw. dessen Gehäuse zumindest teilweise die erste Kammer bzw. die Wandung der ersten Kammer.

Vorteilhaft ist der Phasenübergang von flüssig zu gasförmig. Dabei kann das kalte erste Wärmeübertragungsmedium an einem Boden (relativ zur Richtung der Schwerkraft unten) der ersten Kammer erwärmt werden und sukzessive verdampfen. Das gasförmige erste Wärmeübertragungsmedium kann in der ersten Kammer aufsteigen und an einer Decke der ersten Kammer (in wärmeleitender Verbindung zum Gasdruckregler) oder direkt an dem Gasdruckregler kondensieren und wieder zum Boden zurücktropfen.

Infolge des Kondensationsprozesses kann ein im Vergleich zu einer flüssig-flüssig oder gasförmig-gasförmig Ausführung des ersten Wärmeübertragungsmediums (also ohne Phasenübergang) ein sehr hoher Wärmeübergang und ein schnelleres Ansprechverhalten realisiert werden. Weiter kann insbesondere durch die rechnerisch einfach zu ermittelnde Menge an zu verdampfender Flüssigkeit die Menge des ersten Wärmeübertragungsmediums im Vergleich zur flüssig-flüssig Ausführung deutlich reduziert werden.

Insbesondere kontaktiert ausschließlich das verdampfte erste Wärmeübertragungsmedium den Gasdruckregler, so dass eine größtmögliche Fläche des Gasdruckreglers für die Kondensation des ersten Wärmeübertragungsmediums verfügbar ist.

Die Ausführungen gelten insbesondere gleichermaßen für das zweite Wärmeübertragungsmedium. Dabei kondensiert das zweite Wärmeübertragungsmedium an einer Decke der zweiten Kammer, die in wärmeleitender Verbindung zur ersten Kammer angeordnet ist.

Insbesondere umfasst die Heizeinrichtung zumindest eine elektrische Heizquelle, bzw. erzeugt die Heizquelle Wärme durch elektrische Widerstandserwärmung.

Insbesondere kontaktiert die elektrische Heizquelle zumindest das erste Wärmeübertragungsmedium (oder ausschließlich oder zusätzlich das zweite Wärmeübertragungsmedium) unmittelbar.

Alternativ oder zusätzlich kann die Heizeinrichtung ein Abgas als eine Heizquelle umfassen, wobei das Abgas durch die Verbrennung des CNG- oder LNG-Kraftstoffes gebildet ist. Insbesondere erfolgt die Verbrennung des CNG- oder LNG-Kraftstoffes ausschließlich in der Verbrennungskraftmaschine, wobei das Abgas ausgehend von der Verbrennungskraftmaschine an die Umgebung abgeführt wird. Die Wärme des Abgases kann als Heizquelle genutzt werden.

Alternativ kann ein anders erzeugtes Abgas als Heizquelle verwendet werden. Insbesondere wird das Abgas außerhalb der Verbrennungskraftmaschine durch Verbrennung bzw. Umsetzung eines Kraftstoffes, insbesondere des CNG- oder LNG-Kraftstoffes, gebildet.

Es wird weiter eine Verbrennungskraftmaschine vorgeschlagen, zumindest umfassend das beschriebene Zuführsystem und stromabwärts der Verbrennungskraftmaschine eine Abgasleitung zur Ableitung des in der Verbrennungskraftmaschine (zu Abgas) umgesetzten CNG- oder LNG-Kraftstoffes.

Insbesondere umfasst die Heizeinrichtung ein Abgas als eine Heizquelle, wobei das Abgas durch die Verbrennung eines Kraftstoffes, insbesondere des CNG- oder LNG-Kraftstoffes, bevorzugt durch Verbrennung in der Verbrennungskraftmaschine, gebildet ist. Insbesondere ist das Abgas stromabwärts und/oder stromaufwärts einer Abgasnachbehandlungseinrichtung als Heizquelle entnehmbar. Insbesondere kann dabei berücksichtigt werden, dass dem Abgas Wärme erst stromabwärts einer Abgasnachbehandlungseinrichtung entzogen wird, so dass eine frühzeitige und effektive Abgasbehandlung durch die Abgasnachbehandlungseinrichtung ermöglicht wird.

Insbesondere ist das als Heizquelle genutzte Abgas über einen Bypass der Abgasleitung hin zur Heizeinrichtung leitbar. Das Abgas kann insbesondere von der Abgasleitung (teilweise bzw. regelbar) abgezweigt werden, über den Bypass strömen und insbesondere zurück in die Abgasleitung geleitet werden.

Der Bypass kann über eine Regeleinrichtung hinsichtlich z.B. eines Volumenstroms des Abgases regelbar sein, z. B. über ein Ventil.

Weiter wird ein Kraftfahrzeug mit der beschriebenen Verbrennungskraftmaschine vorgeschlagen. Die Verbrennungskraftmaschine wird zum Antrieb des Kraftfahrzeuges eingesetzt.

Die Ausführungen zu dem Zuführsystem sind insbesondere auf die Verbrennungskraftmaschine und das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Verbrennungskraftmaschine mit einer ersten Ausführungsvariante (nicht Teil der Erfindung) eines Zuführsystems;
- Fig. 2:: eine zweite Ausführungsvariante (nicht Teil der Erfindung) eines Zuführsystems;
- Fig. 3:: eine dritte Ausführungsvariante (nicht Teil der Erfindung) eines Zuführsystems;
- Fig. 4:: eine vierte Ausführungsvariante (nicht Teil der Erfindung) eines Zuführsystems;
- Fig. 5:: einen Teil einer Heizeinrichtung (nicht Teil der Erfindung) mit einer ersten Kammer;
- Fig. 6:: einen Teil einer weiteren Heizeinrichtung (erfindungsgemäß) mit einer ersten Kammer und einer zweiten Kammer.

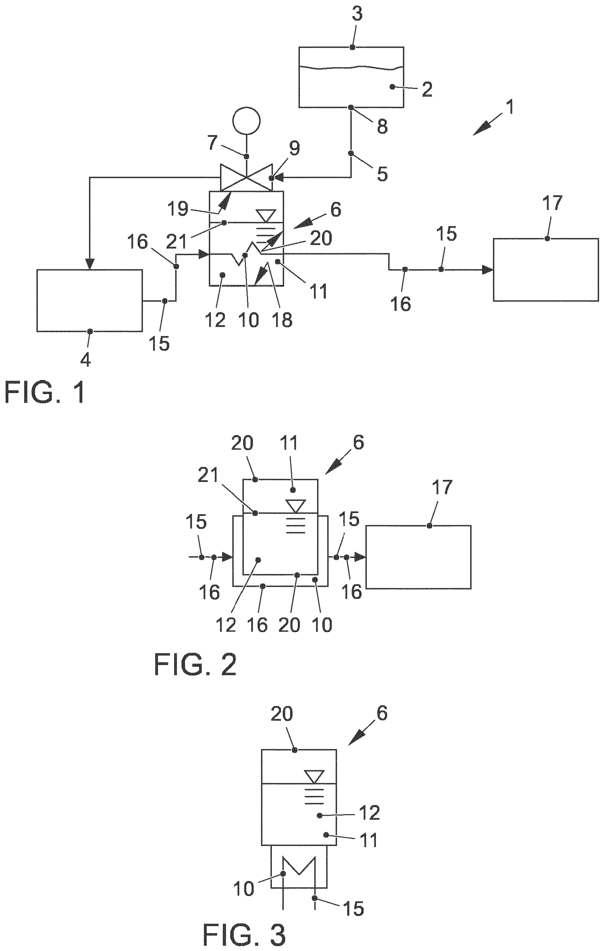

Fig. 1 zeigt eine Verbrennungskraftmaschine 4 mit einer ersten Ausführungsvariante des Zuführsystems 1.

Die Verbrennungskraftmaschine 4 umfasst das Zuführsystem 1 und stromabwärts der Verbrennungskraftmaschine 4 eine Abgasleitung 16 zur Ableitung des in der Verbrennungskraftmaschine 4 erzeugten Abgases 15.

Das Zuführsystem 1 weist eine Leitung 5, eine Heizeinrichtung 6 und einen Gasdruckregler 7 auf, wobei die Leitung 5 über ein erstes Ende 8 mit einem Tank 3 verbunden ist und über ein zweites Ende 9 mit dem Gasdruckregler 7 verbunden ist. Der Gasdruckregler 7 ist über die Heizeinrichtung 6 beheizbar.

Die Heizeinrichtung 6 umfasst eine Heizquelle 10 und eine erste Kammer 11 mit einem Boden 18 und einer Decke 19, in der ein erstes Wärmeübertragungsmedium 12 angeordnet ist. Die erste Kammer 11 wird von einer Wandung 20 umfasst. Eine Beheizung des Gasdruckreglers 7 erfolgt ausgehend von der Heizquelle 10 und zumindest über das erste Wärmeübertragungsmedium 12.

Hier umfasst die Heizeinrichtung 6 ein Abgas 15 als eine Heizquelle 10, wobei das Abgas 15 durch die Verbrennung des CNG- oder LNG-Kraftstoffes 2 in der Verbrennungskraftmaschine 4 gebildet ist. Das Abgas 15 ist stromaufwärts einer Abgasnachbehandlungseinrichtung 17 als Heizquelle 10 entnehmbar.

Die Heizquelle 10 ist innerhalb der flüssigen Phase des ersten Wärmeübertragungsmediums 12 angeordnet. Der Übergang 21 zwischen flüssiger Phase und gasförmiger Phase ist in der ersten Kammer 11 als durchgezogene Linie dargestellt.

Fig. 2 zeigt eine zweite Ausführungsvariante eines Zuführsystems 1. Auf die Ausführungen zu Fig. 1 wird verwiesen.

Im Unterschied zu Fig. 1 wird das erste Wärmeübertragungsmedium 12 hier nur mittelbar über das Abgas 15 als Heizquelle 10 erwärmt. Das Abgas durchströmt die Abgasleitung 16 und wird entlang der Wandung 20 der ersten Kammer 11 um die erste Kammer 11 herumgeführt. Das Abgas 15 wird stromaufwärts und/oder stromabwärts einer Abgasnachbehandlungseinrichtung 17 als Heizquelle 10 entnommen.

Fig. 3 zeigt eine dritte Ausführungsvariante eines Zuführsystems 1. Auf die Ausführungen zu Fig. 2 wird verwiesen.

Im Unterschied zu Fig. 2 wird das erste Wärmeübertragungsmedium 12 hier über eine Heizquelle 10, die nicht das Abgas 15 der Verbrennungskraftmaschine 4 umfasst, erwärmt. Die Heizquelle 10 kann eine elektrische Heizquelle 10 (Widerstandsheizung) oder ein nicht in der Verbrennungskraftmaschine 4 erzeugtes Abgas 15 sein.

Die Heizquelle 10 ist außerhalb der ersten Kammer 11 angeordnet. Die Wärme der Heizquelle 10 wird über die Wandung 20 der ersten Kammer 11 auf das erste Wärmeübertragungsmedium 12 übertragen.

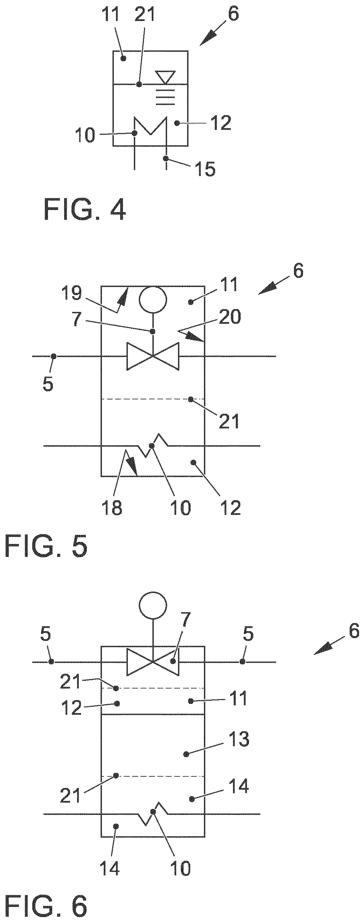

Fig. 4 zeigt eine vierte Ausführungsvariante eines Zuführsystems 1. Auf die Ausführungen zu Fig. 3 wird verwiesen.

Wie bei der dritten Ausführungsvariante wird das erste Wärmeübertragungsmedium 12 über eine Heizquelle 10, die nicht das Abgas 15 der Verbrennungskraftmaschine 4 umfasst, erwärmt. Die Heizquelle 10 kann eine elektrische Heizquelle 10 (Widerstandsheizung) oder ein nicht in der Verbrennungskraftmaschine 4 erzeugtes Abgas 15 sein.

Im Unterschied zu Fig. 3 ist die Heizquelle 10 innerhalb der ersten Kammer 10 angeordnet. Die Wärme der Heizquelle 10 wird unmittelbar auf das erste Wärmeübertragungsmedium 12 übertragen.

Die Heizquelle 10 ist innerhalb der flüssigen Phase des ersten Wärmeübertragungsmediums 12 angeordnet. Der Übergang 21 zwischen flüssiger Phase und gasförmiger Phase ist in der ersten Kammer 11 als durchgezogene Linie dargestellt.

Fig. 5 zeigt einen Teil einer Heizeinrichtung 6 mit einer ersten Kammer 11. Die Leitung 5 erstreckt sich über die Wandung 20 durch die erste Kammer 11. Der Gasdruckregler 7 ist vollständig innerhalb der ersten Kammer 11 und oberhalb des z. B. flüssigen ersten Wärmeübertragungsmediums 12 und innerhalb des z. B. gasförmigen ersten Wärmeübertragungsmediums 12 angeordnet und wird durch das erste Wärmeübertragungsmedium 12 innerhalb der ersten Kammer 11 unmittelbar beaufschlagt. Die Leitung 5 und der Gasdruckregler 7 sind gasdicht zur ersten Kammer 11 und zum ersten Wärmeübertragungsmedium 12 angeordnet bzw. ausgeführt.

Die gestrichelte Linie innerhalb der ersten Kammer 11 symbolisiert die Zone des Phasenübergangs 21 von flüssig zu gasförmig des ersten Wärmeübertragungsmediums 12.

Das erste Wärmeübertragungsmedium 12 weist während der Beheizung durch die Heizquelle 10 und zur Beheizung der Leitung 5 einen Phasenübergang von flüssig zu gasförmig auf. Der Gasdruckregler 7 und hier ein Teil der Leitung 5 sind durch eine Kondensation des ersten Wärmeübertragungsmediums 12 beheizbar.

Das kalte erste Wärmeübertragungsmedium 12 wird im Bereich eines Bodens 18 (relativ zur Richtung der Schwerkraft unten) der ersten Kammer 11 erwärmt und verdampft sukzessive. Das gasförmige erste Wärmeübertragungsmedium 12 kann in der ersten Kammer 11 aufsteigen und direkt an dem Gasdruckregler 7 bzw. an der Decke 19 kondensieren und wieder in Richtung hin zum Boden 18 bzw. zum flüssig vorliegenden ersten Wärmeübertragungsmedium 12 zurücktropfen.

Ausschließlich das verdampfte erste Wärmeübertragungsmedium 12 kontaktiert den Gasdruckregler 7, so dass eine größtmögliche Fläche des Gasdruckreglers 7 für die Kondensation des ersten Wärmeübertragungsmediums 12 verfügbar ist.

Fig. 6 zeigt einen Teil einer weiteren Heizeinrichtung 6 mit einer ersten Kammer 11 und einer zweiten Kammer 13. Hier ist der Gasdruckregler 7 nur teilweise innerhalb der ersten Kammer 11 angeordnet.

Die Heizeinrichtung 6 umfasst zusätzlich eine zweite Kammer 13, in der ein zweites Wärmeübertragungsmedium 14 angeordnet ist. Die Beheizung des Gasdruckreglers 7 erfolgt ausgehend von der Heizquelle 10 zunächst über das zweite Wärmeübertragungsmedium 14 und dann zumindest über das erste Wärmeübertragungsmedium 12.

Die gestrichelten Linien innerhalb der ersten Kammer 11 und der zweiten Kammer 13 symbolisieren die Zone des Phasenübergangs 21 von flüssig zu gasförmig des ersten Wärmeübertragungsmediums 12 bzw. des zweiten Wärmeübertragungsmediums 14.

## Patentansprüche

1. Zuführsystem (1) zum Zuführen eines CNG- oder LNG-Kraftstoffes (2) aus einem Tank (3) hin zu einer Verbrennungskraftmaschine (4), wobei das Zuführsystem (1) zumindest eine Leitung (5), eine Heizeinrichtung (6) und einen Gasdruckregler (7) aufweist, wobei die Leitung (5) über ein erstes Ende (8) mit dem Tank (3) verbindbar ist und über ein zweites Ende (9) mit dem Gasdruckregler (7) verbunden ist; wobei zumindest der Gasdruckregler (7) über die Heizeinrichtung (6) beheizbar ist, wobei die Heizeinrichtung (6) zumindest eine Heizquelle (10) und eine erste Kammer (11) umfasst, in der ein erstes Wärmeübertragungsmedium (12) angeordnet ist; wobei eine Beheizung des Gasdruckreglers (7) ausgehend von der Heizquelle (10) und zumindest über das erste Wärmeübertragungsmedium (12) erfolgen kann; wobei die Beheizung zumindest einen Phasenübergang zumindest des ersten Wärmeübertragungsmediums (12) umfasst; wobei die Heizeinrichtung (6) zumindest eine zweite Kammer (13) umfasst, in der ein zweites Wärmeübertragungsmedium (14) angeordnet ist; wobei die Beheizung des Gasdruckreglers (7) ausgehend von der Heizquelle (10) zunächst über das zweite Wärmeübertragungsmedium (14) und dann zumindest über das erste Wärmeübertragungsmedium (12) erfolgt.

2. Zuführsystem (1) nach Patentanspruch 1, wobei das erste Wärmeübertragungsmedium (12) nach Erwärmung zumindest teilweise von einem flüssigen Zustand in einen gasförmigen Zustand wechselt und der Gasdruckregler (7) durch eine Kondensation des ersten Wärmeübertragungsmediums (12) beheizbar ist.

3. Zuführsystem (1) nach einem der vorhergehenden Patentansprüche, wobei der Gasdruckregler (7) unmittelbar von dem ersten Wärmeübertragungsmedium (12) beaufschlagbar ist.

4. Zuführsystem (1) nach einem der vorhergehenden Patentansprüche, wobei die Heizeinrichtung (6) zumindest eine elektrische Heizquelle (10) umfasst.

5. Zuführsystem (1) nach Patentanspruch 4, wobei die elektrische Heizquelle (10) zumindest das erste Wärmeübertragungsmedium (12) unmittelbar kontaktiert.

6. Zuführsystem (1) nach einem der vorhergehenden Patentansprüche, wobei die Heizeinrichtung (6) ein Abgas (15) als eine Heizquelle (10) umfasst, wobei das Abgas (15) durch die Verbrennung des CNG- oder LNG-Kraftstoffes (2) gebildet ist.

7. Verbrennungskraftmaschine (4), zumindest umfassend ein Zuführsystem (1) nach einem der vorhergehenden Patentansprüche und stromabwärts der Verbrennungskraftmaschine (4) eine Abgasleitung (16) zur Ableitung des in der Verbrennungskraftmaschine (4) umgesetzten CNG- oder LNG-Kraftstoffes (2).

8. Verbrennungskraftmaschine (4) nach Patentanspruch 7, wobei die Heizeinrichtung (6) ein Abgas (15) als eine Heizquelle (10) umfasst, wobei das Abgas (15) durch die Verbrennung des CNG- oder LNG-Kraftstoffes (2) in der Verbrennungskraftmaschine (4) gebildet ist; wobei das Abgas (15) stromabwärts oder stromaufwärts einer Abgasnachbehandlungseinrichtung (17) als Heizquelle (10) entnehmbar ist.

## Claims

1. Feed system (1) for feeding a CNG or LNG fuel (2) from a tank (3) to an internal combustion engine (4), wherein the feed system (1) has at least one line (5), one heating device (6) and one gas pressure regulator (7), wherein the line (5) can be connected via a first end (8) to the tank (3) and is connected via a second end (9) to the gas pressure regulator (7); wherein at least the gas pressure regulator (7) can be heated via the heating device (6), wherein the heating device (6) comprises at least one heating source (10) and one first chamber (11) in which a first heat transfer medium (12) is arranged; wherein heating of the gas pressure regulator (7) can be realized from the heating source (10) and at least via the first heat transfer medium (12); wherein the heating comprises at least one phase transition at least of the first heat transfer medium (12); wherein the heating device (6) comprises at least one second chamber (13) in which a second heat transfer medium (14) is arranged; wherein the heating of the gas pressure regulator (7) is realized from the heating source (10) firstly via the second heat transfer medium (14) and then at least via the first heat transfer medium (12).

2. Feed system (1) according to Patent Claim 1, wherein the first heat transfer medium (12) at least partially changes from a liquid state into a gaseous state after being heated, and the gas regulator (7) can be heated by way of condensation of the first heat transfer medium (12).

3. Feed system (1) according to either of the preceding patent claims, wherein the gas pressure regulator (7) can be charged directly by the first heat transfer medium (12).

4. Feed system (1) according to one of the preceding patent claims, wherein the heating device (6) comprises at least one electrical heating source (10).

5. Feed system (1) according to Patent Claim 4, wherein the electrical heating source (10) directly contacts at least the first heat transfer medium (12).

6. Feed system (1) according to one of the preceding patent claims, wherein the heating device (6) comprises an exhaust gas (15) as a heating source (10), wherein the exhaust gas (15) is formed by the combustion of the CNG or LNG fuel (2).

7. Internal combustion engine (4), at least comprising a feed system (1) according to one of the preceding patent claims and, downstream of the internal combustion engine (4), an exhaust gas line (16) for discharging the CNG or LNG fuel (2) converted in the internal combustion engine (4).

8. Internal combustion engine (4) according to Patent Claim 7, wherein the heating device (6) comprises an exhaust gas (15) as a heating source (10), wherein the exhaust gas (15) is formed by the combustion of the CNG or LNG fuel (2) in the internal combustion engine (4); wherein the exhaust gas (15) can be extracted as a heating source (10) downstream or upstream of an exhaust gas aftertreatment device (17).

## Revendications

1. Système d'alimentation (1) pour l'alimentation d'un carburant CNG ou LNG (2) à partir d'un réservoir (3) jusqu'à un moteur à combustion interne (4), le système d'alimentation (1) comprenant au moins une conduite (5), un appareil chauffant (6) et un régulateur de pression de gaz (7), la conduite (5) pouvant être raccordée au réservoir (3) par l'intermédiaire d'une première extrémité (8) et étant raccordée au régulateur de pression de gaz (7) par l'intermédiaire d'une deuxième extrémité (9) ; au moins le régulateur de pression de gaz (7) pouvant être chauffé par l'intermédiaire de l'appareil chauffant (6), l'appareil chauffant (6) comprenant au moins une source de chaleur (10) et une première chambre (11), dans laquelle un premier milieu de transfert de chaleur (12) est agencé ; un chauffage du régulateur de pression de gaz (7) pouvant avoir lieu à partir de la source de chaleur (10) et au moins par l'intermédiaire du premier milieu de transfert de chaleur (12) ; le chauffage comprenant au moins une transition de phases d'au moins le premier milieu de transfert de chaleur (12) ; l'appareil chauffant (6) comprenant au moins une deuxième chambre (13), dans laquelle un deuxième milieu de transfert de chaleur (14) est agencé ; le chauffage du régulateur de pression de gaz (7) ayant lieu à partir de la source de chaleur (10) tout d'abord par l'intermédiaire du deuxième milieu de transfert de chaleur (14) et ensuite au moins par l'intermédiaire du premier milieu de transfert de chaleur (12).

2. Système d'alimentation (1) selon la revendication 1, le premier milieu de transfert de chaleur (12) passant au moins partiellement d'un état liquide à un état gazeux après le réchauffement, et le régulateur de pression de gaz (7) pouvant être chauffé par une condensation du premier milieu de transfert de chaleur (12).

3. Système d'alimentation (1) selon l'une quelconque des revendications précédentes, le régulateur de pression de gaz (7) pouvant être sollicité directement par le premier milieu de transfert de chaleur (12).

4. Système d'alimentation (1) selon l'une quelconque des revendications précédentes, l'appareil chauffant (6) comprenant au moins une source de chaleur électrique (10).

5. Système d'alimentation (1) selon la revendication 4, la source de chaleur électrique (10) contactant directement au moins le premier milieu de transfert de chaleur (12).

6. Système d'alimentation (1) selon l'une quelconque des revendications précédentes, l'appareil chauffant (6) comprenant un gaz d'échappement (15) en tant que source de chaleur (10), le gaz d'échappement (15) étant formé par la combustion du carburant CNG ou LNG (2).

7. Moteur à combustion interne (4), comprenant au moins un système d'alimentation (1) selon l'une quelconque des revendications précédentes et, en aval du moteur à combustion interne (4), une conduite de gaz d'échappement (16) pour le déchargement du carburant CNG ou LNG (2) transformé dans le moteur à combustion interne (4).

8. Moteur à combustion interne (4) selon la revendication 7, l'appareil chauffant (6) comprenant un gaz d'échappement (15) en tant que source de chaleur (10), le gaz d'échappement (15) étant formé par la combustion du carburant CNG ou LNG (2) dans le moteur à combustion interne (4) ; le gaz d'échappement (15) pouvant être soutiré en tant que source de chaleur (10) en aval ou en amont d'un appareil de post-traitement de gaz d'échappement (17).
